# EUROPÄISCHE PATENTANMELDUNG

(11) **EP 1 318 161 A1**
(43) Veröffentlichungstag der Anmeldung: **11.06.2003**
(21) Anmeldenummer: 02022726.0
(22) Anmeldetag: 11.10.2002
(51) Int. Cl.: C08G 18/42, C08G 18/80

(54) **PUR-Pulverlackzusammensetzungen und ihre Verwendung für Polyurethan-Pulverlacke und insbesondere für Pulver-Coil Coating-Lacke**

(30) Priorität: 04.12.2001 DE 10159488
(71) Anmelder: Degussa AG, 40474 Düsseldorf (DE)
(72) Erfinder: Wenning, Andreas, Dr., 48301 Nottuln (DE); Franzmann, Giselher, Dr., 58453 Witten (DE)

(57) **Zusammenfassung**

Die vorliegende Erfindung betrifft PUR-Pulverlackzusammensetzungen auf Basis semikristalliner Polyester, amorpher Polyester und blockierter Polyisocyanate und ihre Verwendung für Polyurethan-Pulverlacke und Pulver-Coil Coating-Lacke.

## Beschreibung

Die vorliegende Erfindung betrifft PUR-Pulverlackzusammensetzungen auf Basis semikristalliner Polyester, amorpher Polyester und blockierter Polyisocyanate und ihre Verwendung für Polyurethan-Pulverlacke und insbesondere für Pulver-Coil Coating-Lacke.

Hitze härtende Pulverlackzusammensetzungen werden intensiv zur Herstellung vernetzter Beschichtungen verschiedenster Substrate eingesetzt. Hitze härtende Lacke sind im Vergleich zu thermoplastischen Zusammensetzungen generell härter, resistenter gegenüber Lösemitteln und Detergentien, besitzen eine bessere Adhäsion zu metallischen Substraten und erweichen nicht bei der Exposition erhöhter Temperaturen.

Seit 1970 sind Hitze härtende Pulver förmige Massen bekannt, die man durch Reaktion eines Hydroxylgruppen haltigen Harzes mit einem maskierten Polyisocyanat erhält. Von den maskierten Polyisocyanaten haben sich als PUR-Pulverlackhärter e-Caprolactam-blockierte Isophorondiisocyanataddukte durchgesetzt. Die mit diesen Härtern hergestellten PUR-Pulver werden infolge ihrer überlegenen Witterungs- und Wärmefarbstabilität zur Beschichtung verschiedenster Gegenstände aus Metall eingesetzt. Derartige Pulver werden z. B. in der DE 27 35 497 beschrieben. Mit diesen Pulvern werden fertig geformte Metallteile Stück für Stück beschichtet (post coated metal).

Coil Coating hingegen ist ein Verfahren zur Beschichtung von Metallbändern mit Geschwindigkeiten von 60 bis 200 m/min. Es werden Bleche, vorzugsweise aus Stahl oder Aluminium gereinigt und mit einem Lack beschichtet. Anschließend werden diese Bleche der Weiterverarbeitung zugeführt, wo sie ihre eigentliche Form erhalten. Die wichtigsten Einsatzgebiete sind Trapezprofile, beschichtet mit Wetter beständigen Lacken, z. B. für Fassaden und Dächer sowie Türen, Fensterrahmen, Tore, Dachrinnen und Jalousien. Für den Innenbereich finden Coil Coating beschichtete Bleche für Trennwände und Deckenelemente ihre Hauptanwendung. Andere Einsatzgebiete sind aber auch Stahlmöbel, Regalbau, Ladenbau und Geräteverkleidungen. Lampen und Leuchten bilden ein weiteres wichtiges Anwendungssegment. Ebenso gibt es im Fahrzeugbereich eine breite Anwendungspalette. LKW-Aufbauten und Automobilanbauteile werden vielfach aus vorbeschichteten Materialien gefertigt.

Zum Beschichten des eingesetzten Substrats wird in der Regel eine Vorbehandlung durchgeführt. Als erste Lackschicht wird auf der späteren Sichtseite ein Primer in einer Schichtdicke von 5 bis 10 µm aufgetragen. Nach dem ersten Trocknerdurchlauf erfolgt dann die eigentliche Decklackierung. Sie weist nach dem Trocknen eine Schichtdicke von etwa 20 µm auf. Teilweise wird diese Oberfläche noch mit einer temporären Schutzfolie im heißen Zustand kaschiert. Dadurch soll sie vor mechanischen Verletzungen geschützt werden. Parallel zu der Sichtseitenbeschichtung werden auch die Rückseiten mitlackiert. Als Primer werden beispielsweise Polyesterharze verwendet. Für Coil Coating beschichtete Fassaden und Dächer im korrosiven Industrieklima werden als Primer Epoxid haltige Systeme eingesetzt. In erster Linie werden Flüssiglacke mit unzähligen Farbtönen als Decklack verwendet. Je nach Anwendungsbereich kommen z. B. Polyester-, Polyurethan- oder PVDF-Decklacke zur Anwendung. Die Schichtdicken der Decklacke liegen üblicherweise bei ca. 20 µm.

Neben den flüssigen Primern und Decklacken werden auch Pulverlacke zur Beschichtung von Metallbändern im Coil Coating-Verfahren verwendet. Pulverlacke haben gegenüber den flüssigen Lacken den großen Vorteil, dass sie Lösemittel frei und damit ökologischer sind. Allerdings war ihr Anteil an den Coil Coating-Lacksystemen bisher relativ gering.

Der Grund lag zum einen an den hohen Schichtdicken der Pulverlacke von über 40 µm. Sie führen zu optischen Defekten, da die Oberfläche nicht mehr gänzlich Poren frei ist. Durch die WO 97/47400 wurde dieser Nachteil beseitigt. Sie beschreibt ein Verfahren zur Beschichtung von Metallbändern, mit dem Pulver-Schichtdicken von weniger als 20 µm erzielt werden können.

Ein zweiter Nachteil im Vergleich zu Flüssiglacken lag in der recht langsamen Bandgeschwindigkeit beim Auftragen des Pulverlackes. Mit elektrostatischen Sprühpistolen lassen sich Metallbänder mit Pulverlack nur mit Anlagengeschwindigkeiten von maximal 20 m/min beschichten. Durch die MSC Powder Cloud™-Technologie, die z. B. von F. D. Graziano, XXIIIrd International Conference in Organic Coatings, Athen, 1997, Seiten 139 - 150 oder von M. Kretschmer, 6. DFO-Tagung Pulverlack-Praxis, Dresden, 2000, Seiten 95 - 100 beschrieben wird, lassen sich nun Bandgeschwindigkeiten von 60 bis 100 m/min realisieren.

PUR-Pulverlacke sind u. a. für ihre hohe Bewitterungsstabilität, exzellenten Verlauf und gute Flexibilität bekannt. Für den Einsatz in Coil Coating-Lacken reicht die Flexibilität der bisher bekannten Systeme jedoch oft nicht aus. Daher werden neue PUR-Pulverlacke gesucht, die der extremen Flexibilitätsanforderung von Coil Coating-Lacken genügen. Damit hätte man auch den dritten entscheidenden Nachteil gegenüber konventionellen Flüssiglacken ausgeräumt.

Die US 4,387,214 und US 4,442,270 beschreiben die Verwendung von semikristallinen Polyestern aus Terephthalsäure und Hexandiol-1,6 in Polyurethan-Pulverlacken als Primer oder Decklack für Automobile. Diese Lacke sind sehr flexibel. Die Oberflächen sind aber recht weich und damit wenig kratzbeständig. Hochglanzklarlacke lassen sich mit diesem Pulverlack nicht herstellen, da der kristalline Polyester mit der amorphen Isocyanatkomponente nicht verträglich ist. Es kommt zu Trübungen im Lackfilm, die den Glanz reduzieren. Ein Einsatz in Coil Coating-Pulverlacken ist auch nicht möglich, da die Filme unter den extremen Härtungsbedingungen - Härtung bei hohen Temperaturen mit anschließender Schockkühlung - Risse bekommen.

Die US 4,859,760 beschreibt eine Pulverlackzusammensetzung aus einem Gemisch von amorphen und semikristallinen Polyesterpolyolen, die mit blockierten Polyisocyanaten vernetzt werden. Die semikristallinen Polyester besitzen eine Glasübergangstemperatur von - 10 bis + 50 °C. Sie enthalten Terephthalsäure. Damit ist die Bewitterungsstabilität der Pulverlacke für anspruchsvolle Außenanwendungen wie z. B. Automobil- oder Fassadenlackierung nicht ausreichend.

Die WO 94/02552 beschreibt semikristalline Polyester auf Basis Hexandiol-1,6 und 1,12-Dodecandisäure als Plastifizierungsmittel für Pulverlacke. Der Zusatz des semikristallinen Polyesters verbessert den Verlauf, die Flexibilität und die Verformbarkeit der Pulverlacke. Eine Verwendung der Pulverlacke für Coil Coating-Beschichtungen wird nicht beschrieben. Bei Einsatz Uretdiongruppen haltiger Polyisocyanat-Vernetzer sind jedoch hohe Anteile an semikristallinem Polyester notwendig, um die geforderte Flexibilität, insbesondere für Pulver-Coil Coating-Anwendungen, zu erreichen. Dadurch wird der Glanz der Beschichtungen reduziert. Zudem enthält der amorphe Polyester als Dicarbonsäure überwiegend Terephthalsäure. Die Folge ist eine Reduzierung der Bewitterungsstabilität der Pulverlacke.

Die WO 95/01407 beschreibt Wärme härtende Pulverlackzusammensetzungen aus einem amorphen Polyester, der aus Cyclohexandicarbonsäure und einem cycloaliphatischen Diol besteht, einem semikristallinen Polyester, der aus Cyclohexandicarbonsäure und einem linearen Diol besteht, und einem geeigneten Vernetzer. Diese Pulverlacke zeichnen sich durch hohe UV-Beständigkeit und sehr gute Flexibilität aus. Nachteilig ist der hohe Rohstoffpreis für die Cyclohexandicarbonsäure. Eine Verwendung der Pulverlackzusammensetzungen für das Beschichten nach dem Coil Coating-Verfahren wird nicht beschrieben.

Aufgabe der vorliegenden Erfindung war es daher, preiswerte, hoch wetterstabile und sehr flexible Pulverlackzusammensetzungen zu finden, die sowohl für PUR-Pulverlacke als auch für PUR-Pulver Coil Coating-Lacke verwendet werden können.

Überraschenderweise wurde festgestellt, dass bestimmte Polyisocyanat-Vernetzer mit Urethangruppen oder Urethan- und Isocyanuratgruppen in Kombination mit amorphen Polyestern, die vorwiegend Isophthalsäure enthalten, und bestimmten (semi)kristallinen Polyestern mit niedrigen Glasübergangstemperaturen zu Bindemitteln verarbeitet werden können, die zur Beschichtung beliebiger, insbesondere metallischer Substrate sowohl als konventioneller Pulverlack als auch nach dem Coil Coating-Verfahren geeignet sind.

Gegenstand der Erfindung sind somit PUR-Pulverlackzusammensetzungen,
dadurch gekennzeichnet, dass sie im Wesentlichen
A) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer Glasübergangstemperatur von < - 10 °C, bestehend aus
   a) i) 85 bis 100 mol-% Bernsteinsäure oder
   a) ii) 85 bis 100 mol-% Adipinsäure oder
   a) iii) 85 bis 100 mol-% Sebacinsäure oder
   a) iv) 85 bis 100 mol-% Dodecandisäure und
   a) v) 15 bis 0 mol-% mindestens einer weiteren aliphatischen, cycloaliphatischen oder aromatischen Dicarbonsäure,
      und
   b) i) 80 bis 100 mol-% Monoethylenglykol oder
   b) ii) 80 bis 100 mol-% Butandiol-1,4 oder
   b) iii) 80 bis 100 mol-% Hexandiol-1,6 und
   b) iv) 20 bis 0 mol-% mindestens eines weiteren aliphatischen oder cycloaliphatischen, linearen oder verzweigten Polyols,
      und
B) 10 bis 80 Gew.-% mindestens eines amorphen Polyesters mit einer Hydroxylzahl von 15 bis 200 mg KOH/g, einem Schmelzpunkt von ≥ 70 °C bis ≤ 120 °C und einer Glasübergangstemperatur von > 40 °C, bestehend aus
   c) i) 40 bis 100 mol-% Isophthalsäure und
   c) ii) 60 bis 0 mol-% mindestens einer weiteren aliphatischen, cycloaliphatischen oder aromatischen Di- oder Polycarbonsäure,
      und
   d) i) 80 bis 100 mol-% mindestens eines linearen, aliphatischen oder cycloaliphatischen Diols und
   d) ii) 20 bis 0 mol-% mindestens eines verzweigten, aliphatischen oder cycloaliphatischen Polyols
      und
C) 5 bis 30 Gew.-% mindestens einer mit einem Blockierungsmittel partiell oder total blockierten Isocyanatkomponente mit Urethangruppen oder Urethan- und Isocyanuratgruppen,
   und
D) gegebenenfalls übliche Hilfs- und Zuschlagstoffe, enthalten.

Als Polyester A) wird mindestens ein semikristalliner oder kristalliner Polyester mit einer Hydroxylzahl von 5 bis 100 mg KOH/g, einem Schmelzpunkt von 50 bis 130 °C und einer Glasübergangstemperatur von < - 10 °C eingesetzt. Die Polyester basieren auf linearen Dicarbonsäuren und aliphatischen oder cycloaliphatischen, linearen oder verzweigten Polyolen. Als Dicarbonsäuren werden Bernsteinsäure oder Adipinsäure oder Sebacinsäure oder Dodecandisäure in Mengen von mindestens 85 mol-%, bezogen auf die Gesamtmenge aller Carbonsäuren, eingesetzt. In dieser Erfindung schließt der Ausdruck Dicarbonsäure stets auch deren Ester, Anhydride oder Säurechloride ein, da sie selbstverständlich ebenfalls eingesetzt werden können. In deutlich geringeren Anteilen bis maximal 15 mol-% können gegebenfalls andere aliphatische, cycloaliphatische oder aromatische Dicarbonsäuren mitverwendet werden. Beispiele für derartige Dicarbonsäuren sind Glutarsäure, Azelainsäure, 1,4-, 1,3- oder 1,2-Cyclohexandicarbonsäure, Terephthalsäure oder Isophthalsäure. Als Polyolkomponente für die (semi)kristallinen Polyester werden Monoethylenglykol oder Butandiol-1,4 oder Hexandiol-1,6 in Mengen von mindestens 80 mol-%, bezogen auf die Gesamtmenge aller Polyole, eingesetzt. In Mengen von maximal 20 mol-% können gegebenfalls andere aliphatische oder cycloaliphatische, lineare oder verzweigte Polyole mitverwendet werden. Beispiele solcher Polyole sind Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glyzerin oder Pentaerythrit.

Als Polyester B) wird mindestens ein amorpher Polyester eingesetzt. Die amorphen Polyester basieren auf linearen oder verzweigten Polycarbonsäuren und aliphatischen oder cycloaliphatischen, linearen oder verzweigten Polyolen. Als Dicarbonsäure wird in einer Menge von mindestens 40 mol-%, bezogen auf die Gesamtmenge aller Carbonsäuren, Isophthalsäure eingesetzt. In Anteilen bis maximal 60 mol-% können gegebenenfalls andere aliphatische, cycloaliphatische oder aromatische Di- oder Polycarbonsäuren mitverwendet werden. Beispiele für derartige Carbonsäuren sind Phthalsäure, Adipinsäure, Azelainsäure, Sebacinsäure, Dodecandisäure, Trimellitsäure, Hexahydroterephthalsäure, Hexahydrophthalsäure, Bernsteinsäure oder 1,4-Cyclohexandicarbonsäure. Als Polyolkomponente für die amorphen Polyester werden lineare, aliphatische oder cycloaliphatische Diole in Mengen von mindestens 80 mol-%, bezogen auf die Gesamtmenge aller eingesetzten Polyole, eingesetzt. Beispiel für derartige Diole sind Monoethylenglykol, Diethylengykol, Hydroxypivalinsäureneopentylglykolester, Neopentylglykol, Cyclohexandimethanol, Butandiol-1,4, Pentandiol-1,5, Pentandiol-1,2, Hexandiol-1,6 oder Nonandiol-1,9. In Mengen von maximal 20 mol-% können gegebenenfalls verzeigte, aliphatische oder cycloaliphatische Polyole mitverwendet werden. Beispiele für derartige Polyole sind Trimethylolpropan, Glyzerin oder Pentaerythrit.

Die einzusetzenden Hydroxylgruppen und Isophthalsäure haltigen amorphen Polyester B) haben eine OH-Funktionalität von 2,0 bis 5, bevorzugt von 2,0 bis 4,2, ein zahlenmittleres Molekulargewicht von 800 bis 8000, bevorzugt von 1200 bis 5000, eine OH-Zahl von 15 bis 200 mg KOH/g, bevorzugt von 20 bis 100 mg KOH/g, einen Schmelzpunkt von ≥ 70 °C bis ≤ 120 °C, bevorzugt von ≥ 75 bis ≤ 100 °C und eine Glasübergangstemperatur von > 40 °C. Wesentlich ist, dass der amorphe Polyester B) Isophthalsäure oder deren Ester oder Säurechlorid in einer Menge von mindestens 40 mol-% enthält.

Die (semi)kristallinen und amorphen Polyester können auf an sich bekannte Weise durch Kondensation von Polyolen und Polycarbonsäuren oder deren Ester, Anhydride oder Säurechloride in einer Inertgasatmosphäre bei Temperaturen von 100 bis 260 °C, vorzugsweise von 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963, bei C. R. Martens, Alkyl Resins, 51 -59, Reinhold Plastics Appl., Series, Reinhold Publishing Comp., New York, 1961 oder in den DE-OSS 27 35 497 und 30 04 903, beschrieben ist.

Als Isocyanatkomponente C) werden Urethangruppen oder Urethan- und Isocyanuratgruppen enthaltende Isocyanate eingesetzt, deren Isocyanatgruppen mit einem Blockierungsmittel partiell oder total blockiert sind. Diese Isocyanate sind prinzipiell bekannt und in vielen Patenten wie z. B. DE 27 12 931, 29 29 224, 22 00 342, DE 196 34 054, EP 0 432 257, US 3 857 818, EP 0 159 117, EP 0 713 871, DE 28 12 252, DE 100 33 097, DE 196 26 886, DE 197 30 670, WO 9906461 oder DE 34 34 881 beschrieben.

Als Isocyanate zur Herstellung der Isocyanatkomponente C) werden Diisocyanate aliphatischer und (cyclo)aliphatischer und/oder cycloaliphatischer Struktur eingesetzt. Derartige Diisocyanate werden z. B. im Houben-Weyl, Methoden der organischen Chemie, Band 14/2, S. 61 ff und J. Liebigs Annalen der Chemie, Band 562, S. 75- 136 beschrieben. Bevorzugt werden in der Regel die technisch leicht zugänglichen aliphatischen Diisocyanate wie Hexamethylendiisocyanat, 2-Methyl-pentamethylen-1,5-diisocyanat, 2-Ethyltetramethylen-1,4-butandiisocyanat oder Trimethyl-hexamethylen-1,6-diisocyanat, insbesondere das 2,2,4- und das 2,4,4-Isomere und technische Gemische beider Isomeren, die (cyclo)aliphatischen Diisocyanate wie Isophorondiisocyanat sowie die cycloaliphatischen Diisocyanate wie 4,4' Diisocyanatodicyclohexylmethan oder Norbornandiisocyanat eingesetzt. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen.

Zur Herstellung der (Urethangruppen enthaltenden) Isocyanatkomponente C) wird in einer ersten Stufe das Diisocyanat mit dem Polyol umgesetzt. Hierbei wird zu dem bei 100 bis 120 °C vorgelegten Diisocyanat das Polyol unter intensivem Rühren innerhalb von 2 bis 3 Stunden unter Stickstoff und Ausschluss von Feuchtigkeit so zudosiert, dass pro OH-Äquivalent des Polyols mindestens 2, maximal 8, vorzugsweise 4 bis 6 Äquivalente NCO des Diisocyanats zur Reaktion kommen. Um die Reaktion zu beschleunigen, kann man einen konventionellen Urethanisierungskatalysator hinzugeben, z. B. Organozinnverbindungen wie auch bestimmte tertiäre Amine, wie Triethylendiamin, und zwar in einer Menge von 0,01 bis 1 Gew.-%, vorzugsweise 0,05 bis 0,15 Gew.-%, bezogen auf das Reaktionsgemisch.

In der zweiten Stufe werden dann die NCO-Gruppen mit einem Blockierungsmittel blockiert. Die Reaktion kann in Substanz oder auch in Gegenwart geeigneter (inerter) Lösemittel durchgeführt werden. Bevorzugt wird jedoch in Substanz gearbeitet. Dabei wird zu dem Polyol-Diisocyanat-Addukt bei ca. 100 bis 130 °C das Blockierungsmittel portionsweise so zugegeben, dass die Temperatur nicht über 140 °C steigt. Nach Beendigung der Zugabe des Blockierungsmittels wird die Reaktionsmischung zur Vervollständigung der Umsetzung nun etwa 1 bis 2 h bei 130 °C erhitzt. Das Blockierungsmittel wird in solchen Mengen zugegeben, dass auf 1 NCO-Äquivalent des urethanisierten Diisocyanats 0,7 bis 1,1 mol Blockierungsmittel, bevorzugt 1 mol, zur Reaktion kommen.

Geeignete Polyole für die Umsetzung mit dem Diisocyanat in der ersten Stufe des Herstellverfahrens sind alle in der PUR-Chemie bekannten Polyole wie z. B. Ethylenglykol, Propandiol-1,3, Butandiol-1,4, Pentandiol-1,5, 3-Methyl-pentandiol-1,5, Hexandiol-1,6, 2,2,4 (2,4,4)-Trimethylhexandiol-1,6, 1,4-Di(hydroxymethyl)-cyclohexan, Diethylenglykol, Triethylenglykol, Diethanolmethylamin, Neopentlylglykol, Triethanolamin, Trimethylolpropan, Trimethylolethan, Glycerin, Pentaerythrit.

Eine vorteilhafte Variante des Herstellverfahrens besteht darin, dass die blockierten Diisocyanat-Addukte in umgekehrter Reihenfolge hergestellt werden; d. h. in der ersten Stufe erfolgt partielle Umsetzung des Diisocyanats mit dem Blockierungsmittel und in der zweiten Stufe die Umsetzung mit dem Polyol.

Das besonders bevorzugte Diisocyanat zur Herstellung der Urethangruppen haltigen Isocyanatkomponente C) ist Isophorondiisocyanat.

Die o. g. Diisocyanate werden auch zur Herstellung der Trimerisate eingesetzt. Die Herstellung der Trimerisate erfolgte in bekannter Weise nach den Angaben der GB-PS 13 91 066, DE-PSS 23 25 826, 26 44 684 oder 29 16 201. Die Verfahrensprodukte bestehen aus Isocyanatoisocyanurat mit gegebenenfalls höheren Oligomeren. Sie weisen einen NCO-Gehalt von 10 bis 22 Gew.-% auf.

In der Urethan- und Isocyanuratgruppen enthaltenden Isocyanatkomponente C) ist das Verhältnis der Urethangruppen zu den Isocyanuratgruppen beliebig einstellbar.

Als Blockierungsmittel zur Blockierung der Isocyanatgruppen der Isocyanatkomponente C) können alle Blockierungsmittel eingesetzt werden. Beispielsweise können Phenole wie Phenol, und p-Chlorphenol, Alkohole wie Benzylalkohol, Oxime wie Acetonoxim, Methylethylketoxim, Cyclopentanonoxim, Cyclohexanonoxim, Methylisobutylketoxim, Methyl-tert.-butylketoxim, Diisopropylketoxim, Diisobutylketoxim oder Acetophenonoxim, N-Hydroxy-Verbindungen wie N-Hydroxysuccinimid oder Hydroxypyridine, Lactame wie ε-Caprolactam, CH-acide Verbindungen wie Acetessigsäureethylester oder Malonsäureester, Amine wie Diisopropylamin, heterocyclische Verbindungen mit mindestens einem Heteroatom wie Mercaptane, Piperidine, Piperazine, Pyrazole, Imidazole, Triazole und Tetrazole, α-Hydroxybenzoesäureester wie Glykolsäureester oder Hydroxamsäureester wie Benzylmethacrylohydroxamat verwendet werden.

Als Blockierungsmittel besonders geeignet sind ∈-Caprolactam, Acetonoxim, Methylethylketoxim, Acetophenonoxim, Diisopropylamin, 3,5-Dimethylpyrazol, 1,2,4-Triazol, Glykolsäurebutylester, Benzylmethacylohydroxamat oder p-Hydroxybenzoesäuremethylester.

Selbstverständlich können auch Mischungen dieser Blockierungsmittel eingesetzt werden.

Zur Durchführung der Blockierungsreaktion wird im Allgemeinen die Isocyanatkomponente vorgelegt und das Blockierungsmittel portionsweise zugegeben. Die Reaktion kann in Substanz oder auch in Gegenwart geeigneter (inerter) Lösemittel durchgeführt werden. Bevorzugt wird jedoch in Substanz gearbeitet. Dabei wird die Isocyanatkomponente auf 90 - 130 °C erhitzt. Bei dieser Temperatur erfolgt in bekannter Weise die Zugabe des Blockierungsmittels. Nach Beendigung der Zugabe des Blockierungsmittels wird die Reaktionsmischung zur Vervollständigung der Umsetzung nun etwa 1 bis 2 h bei 120 °C erhitzt. Das Blockierungsmittel wird in solchen Mengen zugegeben, dass auf 1 NCO-Äquivalent der Isocyanatkomponente 0,5 bis 1,1 mol Blockierungsmittel, bevorzugt 0,8 bis 1 mol, besonders bevorzugt 1 mol, zur Reaktion kommen. Zur Beschleunigung der Isocyanat-Polyadditionsreaktion können die in der Polyurethan-Chemie üblichen Katalysatoren, wie z. B. organische Zinn-, Zink- oder Aminverbindungen in einer Menge von 0,01 bis 1 Gew.-%, bezogen auf das Gesamtgemisch, zugegeben werden.

Die Lösemittel freie Blockierungsreaktion kann auch kontinuierlich im statischen Mischer oder vorteilhaft im Mehrwellenkneter, insbesondere im Zweischneckenextruder, durchgeführt werden.

Der Gesamt-NCO-Gehalt der blockierten Isocyanatkomponente C) beträgt 8 bis 20 Gew.-%, vorzugsweise 9 bis 17 Gew.-%.

Das Mischungsverhältnis von Hydroxylgruppen haltigen (semi)kristallinen, Hydroxylgruppen und Isophthalsäure haltigen, amorphen Polyestern und blockierter Isocyanatkomponente wird in der Regel so gewählt, dass auf eine OH-Gruppe 0,6 bis 1,2, bevorzugt 0,8 bis 1,1, ganz besonders bevorzugt 1,0 blockierte NCO-Gruppen entfallen.

Als Hilfs- und Zuschlagstoffe D) können z. B. Katalysatoren, Pigmente, Füllstoffe, Farbstoffe, Verlaufmittel, z. B. Siliconöl und flüssigen Acrylatharzen, Licht- und Hitzestabilisatoren, Antioxidantien, Glanzverbesserer oder Effektadditive eingesetzt werden.

Ebenfalls Gegenstand der Erfindung ist ein Verfahren zur Herstellung von PUR-Pulverlackzusammensetzungen,
dadurch gekennzeichnet,
dass sie im Wesentlichen
A) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer Glasübergangstemperatur von < - 10 °C,
   bestehend aus
   a) i) 85 bis 100 mol-% Bernsteinsäure oder
   a) ii) 85 bis 100 mol-% Adipinsäure oder
   a) iii) 85 bis 100 mol-% Sebacinsäure oder
   a) iv) 85 bis 100 mol-% Dodecandisäure und
   a) v) 15 bis 0 mol-% mindestens einer weiteren aliphatischen, cycloaliphatischen oder aromatischen Dicarbonsäure,
      und
   b) i) 80 bis 100 mol-% Monoethylenglykol oder
   b) ii) 80 bis 100 mol-% Butandiol-1,4 oder
   b) iii) 80 bis 100 mol-% Hexandiol-1,6 und
   b) iv) 20 bis 0 mol-% mindestens eines weiteren aliphatischen oder cycloaliphatischen, linearen oder verzweigten Polyols,
      und
B) 10 bis 80 Gew.-% mindestens eines amorphen Polyesters mit einer Hydroxylzahl von 15 bis 200 mg KOH/g, einem Schmelzpunkt von ≥ 70 °C bis ≤ 120 °C und einer Glasübergangstemperatur von > 40 °C,
   bestehend aus
   c) i) 40 bis 100 mol-% Isophthalsäure und
   c) ii) 60 bis 0 mol-% mindestens einer weiteren aliphatischen, cycloaliphatischen oder aromatischen Di- oder Polycarbonsäure,
      und
   d) i) 80 bis 100 mol-% mindestens eines linearen, aliphatischen oder cycloaliphatischen Diols und
   d) ii) 20 bis 0 mol-% mindestens eines verzweigten, aliphatischen oder cycloaliphatischen Polyols
      und
C) 5 bis 30 Gew.-% mindestens einer mit einem Blockierungsmittel partiell oder total blockierten Isocyanatkomponente mit Urethangruppen oder Urethan- und Isocyanuratgruppen, und
D) gegebenenfalls Hilfs- und Zuschlagstoffe, enthalten,
   und die Herstellung in beheizbaren Aggregaten bei einer oberen Temperaturgrenze zwischen 130 und 140 °C erfolgt.

Die blockierte Isocyanatkomponente C) wird für die Herstellung von Pulverlacken mit dem geeigneten Hydroxylgruppen haltigen, (semi)kristallinen Polyester A), dem Hydroxylgruppen und Isophthalsäure haltigen, amorphen Polyester B) und ggf. üblichen Hilfs- und Zuschlagstoffen D) gemischt. Die Komponenten A), B), C) und D) werden in der Schmelze homogenisiert. Dies kann in geeigneten Apparaten, z. B. in beheizbaren Knetern, vorzugsweise aber durch Extrudieren erfolgen, wobei Temperaturgrenzen von 130 bis 140 °C nicht überschritten werden sollten. Die extrudierte homogenisierte Masse wird nach Abkühlen auf Raumtemperatur und nach geeigneter Zerkleinerung zum sprühfertigen Pulver vermahlen.

Ein weiterer Gegenstand der Erfindung ist die Verwendung von Zusammensetzungen,
die im Wesentlichen
A) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer Glasübergangstemperatur von < - 10 °C,
   bestehend aus
   a) i) 85 bis 100 mol-% Bernsteinsäure oder
   a) ii) 85 bis 100 mol-% Adipinsäure oder
   a) iii) 85 bis 100 mol-% Sebacinsäure oder
   a) iv) 85 bis 100 mol-% Dodecandisäure und
   a) v) 15 bis 0 mol-% mindestens einer weiteren aliphatischen, cycloaliphatischen oder aromatischen Dicarbonsäure,
      und
   b) i) 80 bis 100 mol-% Monoethylenglykol oder
   b) ii) 80 bis 100 mol-% Butandiol-1,4 oder
   b) iii) 80 bis 100 mol-% Hexandiol-1,6 und
   b) iv) 20 bis 0 mol-% mindestens eines weiteren aliphatischen oder cycloaliphatischen, linearen oder verzweigten Polyols,
      und
B) 10 bis 80 Gew.-% mindestens eines amorphen Polyesters mit einer Hydroxylzahl von 15 bis 200 mg KOH/g, einem Schmelzpunkt von ≥ 70 °C bis ≤ 120 °C und einer Glasübergangstemperatur von > 40 °C,
   bestehend aus
   c) i) 40 bis 100 mol-% Isophthalsäure und
   c) ii) 60 bis 0 mol-% mindestens einer weiteren aliphatischen, cycloaliphatischen oder aromatischen Di- oder Polycarbonsäure,
      und
   d) i) 80 bis 100 mol-% mindestens eines linearen, aliphatischen oder cycloaliphatischen Diols und
   d) ii) 20 bis 0 mol-% mindestens eines verzweigten, aliphatischen oder cycloaliphatischen Polyols
      und
C) 5 bis 30 Gew.-% mindestens einer mit einem Blockierungsmittel partiell oder total blockierten Isocyanatkomponente mit Urethangruppen oder Urethan- und Isocyanuratgruppen, und
D) gegebenenfalls Hilfs- und Zuschlagstoffe,
   enthalten, zur Herstellung von Pulverlacken und Pulver Coil Coating-Lacken.

Mit der erfindungsgemäßen Lackzusammensetzung lassen sich äußerst flexible, witterungsbeständige Beschichtungen, insbesondere nach dem Coil Coating-Verfahren, herstellen.

Gegenstand der Erfindung ist auch ein Verfahren zur Beschichtung von Metallbändern nach dem Coil Coating-Verfahren durch Verwendung von PUR-Pulverlackzusammensetzungen,
die im Wesentlichen
A) 5 bis 80 Gew.-% mindestens eines (semi)kristallinen Polyesters mit einer Hydroxyl-zahl von 5 bis 100 mg KOH/g, einem Schmelzpunkt von 50 bis 130 °C und einer Glasübergangstemperatur von < - 10 °C, bestehend aus
   a) i) 85 bis 100 mol-% Bernsteinsäure oder
   a) ii) 85 bis 100 mol-% Adipinsäure oder
   a) iii) 85 bis 100 mol-% Sebacinsäure oder
   a) iv) 85 bis 100 mol-% Dodecandisäure und
   a) v) 15 bis 0 mol-% mindestens einer weiteren aliphatischen, cycloaliphatischen oder aromatischen Dicarbonsäure,
      und
   b) i) 80 bis 100 mol-% Monoethylenglykol oder
   b) ii) 80 bis 100 mol-% Butandiol-1,4 oder
   b) iii) 80 bis 100 mol-% Hexandiol-1,6 und
   b) iv) 20 bis 0 mol-% mindestens eines weiteren aliphatischen oder cycloaliphatischen, linearen oder verzweigten Polyols,
      und
B) 10 bis 80 Gew.-% mindestens eines amorphen Polyesters mit einer Hydroxylzahl von 15 bis 200 mg KOH/g, einem Schmelzpunkt von ≥ 70 °C bis ≤ 120 °C und einer Glasübergangstemperatur von > 40 °C,
   bestehend aus
   c) i) 40 bis 100 mol-% Isophthalsäure und
   c) ii) 60 bis 0 mol-% mindestens einer weiteren aliphatischen, cycloaliphatischen oder aromatischen Di- oder Polycarbonsäure,
      und
   d) i) 80 bis 100 mol-% mindestens eines linearen, aliphatischen oder cycloaliphatischen Diols und
   d) ii) 20 bis 0 mol-% mindestens eines verzweigten, aliphatischen oder cycloaliphatischen Polyols
      und
C) 5 bis 30 Gew.-% mindestens einer mit einem Blockierungsmittel partiell oder total blockierten Isocyanatkomponente mit Urethangruppen oder Urethan- und Isocyanuratgruppen, und
D) gegebenenfalls Hilfs- und Zuschlagstoffe,
   enthalten sowie die beschichteten Metallbänder selbst.

Das Auftragen des sprühfertigen Pulvers auf geeignete Substrate kann nach den bekannten Verfahren, z. B. elektrostatisches Pulversprühen, Wirbelsintern oder elektrostatisches Wirbelsintern erfolgen. Nach dem Pulverauftrag werden die beschichteten Werkstücke zur konventionellen Aushärtung in einem Ofen 60 Minuten bis 30 Sekunden auf eine Temperatur von 160 bis 250 °C, vorzugsweise 30 bis 1 Minuten bei 170 bis 240 °C erhitzt. Bei der Verwendung eines Coil Coating Ofens betragen die Aushärtebedingungen gewöhnlich 90 bis 10 s bei Temperaturen von 200 bis 350 °C.

Um die Geliergeschwindigkeit der Wärme härtbaren Pulverlacke zu erhöhen, können Katalysatoren zugesetzt werden. Als Katalysatoren verwendet man z. B. Organozinnverbindungen wie Dibutylzinndilaurat, Zinn(II)octoat, Dibutylzinnmaleat oder Butylzinntris(2-ethylhexanoat) oder Amine wie Diazabicyclononan oder Diazabicycloundecen.. Die Menge an zugesetztem Katalysator beträgt 0,01 bis 1,0 Gew.-%, bezogen auf die gesamte Pulverlackmenge.

Nachfolgend wird der Gegenstand der Erfindung anhand von Beispielen erläutert.

### Beispiele:

### A) (Semi)kristalline Polyester

### Beispiel 1

Der Polyester hatte folgende Zusammensetzung: als Säurekomponente: 100 mol-% Dodecandisäure; als Alkoholkomponenten: 100 mol-% Monoethylenglykol. Der Polyester hatte eine OH-Zahl von 31 mg KOH/g, eine Säurezahl von 0,5 mg KOH/g und einen Schmelzpunkt von 85 °C.

### Beispiel 2

Der Polyester hatte folgende Zusammensetzung: als Säurekomponente: 100 mol-% Adipinsäure; als Alkoholkomponenten: 100 mol-% Hexandiol-1,6. Der Polyester hatte eine OH-Zahl von 29 mg KOH/g, eine Säurezahl von 1,0 mg KOH/g und einen Schmelzpunkt von 55°C.

### B) Amorphe Polyester

### Beispiel 1

Der Polyester hatte folgende Zusammensetzung: als Säurekomponente: 100 mol-% Dimethylisophthalat; als Alkoholkomponenten: 96 mol-% Neopentylglykol und 4 mol-% Trimethylolpropan. Der Polyester hatte eine OH-Zahl von 25 mg KOH/g, eine Säurezahl von 2,2 mg KOH/g und eine Glasübergangstemperatur von 54 °C.

### Beispiel 2

Der Polyester hatte folgende Zusammensetzung: als Säurekomponenten: 80 mol-% Dimethylisophthalat, 20 mol-% Hexahydroterephthalat; als Alkoholkomponenten: 20 mol-% Monoethylengykol, 40 mol-% Neopentylglykol und 40 mol-% Cyclohexandimethanol. Der Polyester hatte eine OH-Zahl von 20 mg KOH/g, eine Säurezahl von 0,3 mg KOH/g und eine Glasübergangstemperatur von 52 °C.

### C) Herstellung blockierter Isocyanatkomponenten

### Beispiel 1

Zu 699,8 g Desmodur N 3300 (Polyisocyanato-Isocyanurat auf Basis Hexamethylendiisocyanat der Fa. Bayer) und 1632,8 g VESTANAT T 1890 (Polyisocyanato-Isocyanurat auf Basis Isophorondiisocyanat der Fa. Degussa) wurden auf 100 °C aufgeheizt. Es wurden 3,5 g Dibutylzinndilaurat zugegeben. Danach wurden portionsweise 1163,9 g-Caprolactam zugegeben. Eine Stunde nach der letzten Portion an ∈-Caprolactam war die Reaktion beendet. Danach wurde das Reaktionsgemisch auf Raumtemperatur abgekühlt. Das Reaktionsprodukt hatte einen Gehalt an freien NCO-Gruppen von 0,4 %, einen NCO-Gesamt-Gehalt von 12,0 % und einen Schmelzbereich von 88 - 91 °C.

### Beispiel 2

488,4 g Isophorondiisocyanat wurde unter Rühren auf 110 °C aufgeheizt und 68,3 g Monoethylenglykol zudosiert. Nach einer Reaktionszeit von 60 Minuten wurden 249,1 g-Caprolactam zugegeben. Nach wiederum 60 Minuten wurde das Produkt abgekühlt und zerkleinert. Das Reaktionsprodukt hatte einen Gehalt an freien NCO-Gruppen von 0,2%, einen Gehalt an blockierten NCO-Gruppen von 11,4% und einen Schmelzbereich von 65-75°C.

### D) Polyurethan-Pulverlacke

### Allgemeine Herstellungsvorschrift

Die zerkleinerten Produkte - blockiertes Polyisocyanat (Vernetzer), Polyester, Verlaufmittel, Entgasungsmittel und Katalysator-Masterbatch - werden mit dem Weißpigment in einem Kollergang innig vermischt und anschließend im Extruder bis maximal 130 °C homogenisiert.
Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 kV auf entfettete, Eisen phosphatierte Stahlbleche appliziert und in einem Coil Coating Ofen eingebrannt.

Die Formulierungen enthielten 30 Gew.-% Kronos 2160 (Titandioxid der Fa. Kronos), 1Gew.-% Resiflow PV 88 (Verlaufmittel der Worlée-Chemie), 0,5 Gew.-% Benzoin (Entgasungsmittel der Fa. Merck-Schuchard) und 0,1 Gew.-% Dibutylzinndilaurat (Katalysator der Fa. Crompton Vinyl Additives GmbH). Das OH/NCO-Verhältnis betrug 1 : 1.

**Tabelle 1:**

| Lackdaten weißpigmentierter PUR-Pulver-Coil Coating-Lacke | | | | |
|---|---|---|---|---|
| Polyester A) | 11,76 g A) 1 | - | 17,86 g A) 2 | - |
| Polyester B) | 47,03 g B) 1 | 59,17 g B) 1 | 41,67 g B) 2 | 60,46 g B) 2 |
| Isocyanat C) | 9,61 g C) 1 | 9,23 g C) 1 | 8,87 g C) 2 | 7,94 g C) 2 |
| Einbrennbedingung | 241 °C/70 sec | 241 °C/70 sec | 241 °C/70 sec | 241 °C/70 sec |
| Schichtdicke (µm) | 56 - 70 | 31 - 44 | 58 - 65 | 35 - 59 |
| Glanz 60°-W. | 91 | 90 | 87 | 81 |
| Tiefung (mm) | > 10 | > 10 | > 10 | 7 |
| KS dir./indir. (inch 1b) | > 160 / > 160 | 80 / 20 | > 160 / > 160 | 40 / < 10 |
| T-Bend | 0 T | 1 T | 0 T | > 2 T |
| Bemerkung | | Vergleich | | Vergleich |

Die Abkürzungen in der Tabelle bedeuten:
Glanz 60°-W. = Messung des Glanzes nach Gardner (ASTM-D 5233)
Tiefung = Tiefung nach Erichsen (DIN 53 156)
KS dir./indir. = direkter und indirekter Kugelschlag (ASTM D 2794 - 93)
T-Bend = Verformungstest (ECCA T 7)

## Patentansprüche

1. Polyurethan-Pulverlackzusammensetzungen,
**dadurch gekennzeichnet,**
**dass** sie im Wesentlichen
A) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer Glasübergangstemperatur von < - 10 °C,
bestehend aus
a) i) 85 bis 100 mol-% Bernsteinsäure oder
a) ii) 85 bis 100 mol-% Adipinsäure oder
a) iii) 85 bis 100 mol-% Sebacinsäure oder
a) iv) 85 bis 100 mol-% Dodecandisäure und
a) v) 15 bis 0 mol-% mindestens einer weiteren aliphatischen, cycloaliphatischen oder aromatischen Dicarbonsäure,
und
b) i) 80 bis 100 mol-% Monoethylenglykol oder
b) ii) 80 bis 100 mol-% Butandiol-1,4 oder
b) iii) 80 bis 100 mol-% Hexandiol-1,6 und
b) iv) 20 bis 0 mol-% mindestens eines weiteren aliphatischen oder cycloaliphatischen, linearen oder verzweigten Polyols,
und
B) 10 bis 80 Gew.-% mindestens eines amorphen Polyesters mit einer Hydroxylzahl von 15 bis 200 mg KOH/g, einem Schmelzpunkt von ≥ 70 °C bis ≤ 120 °C und einer Glasübergangstemperatur von > 40 °C,
bestehend aus
c) i) 40 bis 100 mol-% Isophthalsäure und
c) ii) 60 bis 0 mol-% mindestens einer weiteren aliphatischen, cycloaliphatischen oder aromatischen Di- oder Polycarbonsäure,
und
d) i) 80 bis 100 mol-% mindestens eines linearen, aliphatischen oder cycloaliphatischen Diols und
d) ii) 20 bis 0 mol-% mindestens eines verzweigten, aliphatischen oder cycloaliphatischen Polyols
und
C) 5 bis 30 Gew.-% mindestens einer mit einem Blockierungsmittel partiell oder total blockierten Isocyanatkomponente mit Urethangruppen oder Urethan- und
Isocyanuratgruppen,
und
D) gegebenenfalls Hilfs- und Zuschlagstoffe,
enthalten.

2. Polyurethan-Pulverlackzusammensetzungen nach Anspruch 1,
**dadurch gekennzeichnet,**
**dass** der (semi)kristalline Polyester A) als weitere aliphatische, cycloaliphatische oder aromatische Dicarbonsäure Glutarsäure, Azelainsäure, 1,4-, 1,3-, 1,2-Cyclohexandicarbonsäure, Terephthalsäure oder Isophthalsäure allein oder in Mischungen enthält.

3. Polyurethan-Pulverlackzusammensetzungen nach mindestens einem der Ansprüche 1 bis 2,
**dadurch gekennzeichnet,**
**dass** der (semi)kristalline Polyester A) als weiteres aliphatisches oder cycloaliphatisches, lineares oder verzweigtes Polyol Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glyzerin oder Pentaerythrit allein oder in Mischungen enthält.

4. Polyurethan-Pulverlackzusammensetzungen nach mindestens einem der Ansprüche 1 bis 3,
**dadurch gekennzeichnet,**
**dass** der amorphe Polyester B) als weitere aliphatische, cycloaliphatische oder aromatische Di- oder Polycarbonsäure Phthalsäure, Adipinsäure, Azelainsäure, Sebacinsäure, Dodecandisäure, Trimellitsäure, Hexahydroterephthalsäure, Hexahydrophthalsäure, Bernsteinsäure oder 1,4-Cyclohexandicarbonsäure allein oder in Mischungen enthält.

5. Polyurethan-Pulverlackzusammensetzungen nach mindestens einem der Ansprüche 1 bis 4,
**dadurch gekennzeichnet,**
**dass** der amorphe Polyester B) als lineare aliphatische oder cycloaliphatische Diole Monoethylenglykol, Diethylengykol, Hydroxypivalinsäureneopentylglykolester, Neopentylglykol, Cyclohexandimethanol, Butandiol-1,4, Pentandiol-1,5, Pentandiol-1,2, Hexandiol-1,6 oder Nonandiol-1,9 allein oder in Mischungen enthält.

6. Polyurethan-Pulverlackzusammensetzungen nach mindestens einem der Ansprüche 1 bis 5,
**dadurch gekennzeichnet,**
**dass** der amorphe Polyester B) als verzeigte aliphatische oder cycloaliphatische Polyole Trimethylolpropan, Glyzerin oder Pentaerythrit allein oder in Mischungen enthält.

7. Polyurethan-Pulverlackzusammensetzungen nach mindestens einem der Ansprüche 1 bis 6,
**dadurch gekennzeichnet,**
**dass** als Isocyanat in der Isocyanatkomponente C) Diisocyanate aliphatischer und (cyclo)aliphatischer und/oder cycloaliphatischer Struktur eingesetzt werden.

8. Polyurethan-Pulverlackzusammensetzungen nach mindestens einem der Ansprüche 1 bis 7,
**dadurch gekennzeichnet,**
**dass** als Isocyanat in der Isocyanatkomponente C) Hexamethylendiisocyanat, 2-Methylpentamethylen-1,5-diisocyanat, 2-Ethyltetramethylen-1,4-butandiisocyanat, 2,2,4 (2,4,4)-Trimethylhexamethylen-1,6-diisocyanat, Isophorondiisocyanat, 4,4' Diisocyanatodicyclohexylmethan oder Norbornandiisocyanat allein oder in Mischungen eingesetzt werden.

9. Polyurethan-Pulverlackzusammensetzungen nach mindestens einem der Ansprüche 1 bis 8,
**dadurch gekennzeichnet,**
**dass** als Polyol in der Isocyanatkomponenente C) Ethylenglykol, Propandiol-1,3, Butandiol-1,4, Pentandiol-1,5, 3-Methyl-pentandiol-1,5, Hexandiol-1,6, 2,2,4 (2,4,4)-Trimethylhexandiol-1,6, 1,4-Di(hydroxymethyl)-cyclohexan, Diethylenglykol, Triethylenglykol, Diethanolmethylamin, Neopentlylglykol, Triethanolamin, Trimethylolpropan, Trimethylolethan, Glycerin oder Pentaerythrit allein oder in Mischungen eingesetzt werden.

10. Polyurethan-Pulverlackzusammensetzungen nach mindestens einem der Ansprüche 1 bis 9,
**dadurch gekennzeichnet,**
**dass** zur Herstellung der Isocyanatkomponente C) pro OH-Äquivalent des Polyols mindestens 2 und maximal 8 Äquivalente NCO des Diisocyanats zur Reaktion kommen.

11. Polyurethan-Pulverlackzusammensetzungen nach mindestens einem der Ansprüche 1 bis 10,
**dadurch gekennzeichnet,**
**dass** als Isocyanat in der Isocyanatkomponente C) die Trimerisate von Hexamethylendiisocyanat, 2-Methylpentamethylen-1,5-diisocyanat, 2-Ethyltetramethylen-1,4-butandiisocyanat, Trimethylhexamethylen-1,6-diisocyanat Isophorondiisocyanat, 4,4' Diisocyanatodicyclohexylmethan oder Norbornandiisocyanat allein oder in Mischungen eingesetzt werden.

12. Polyurethan-Pulverlackzusammensetzungen nach mindestens einem der Ansprüche 1 bis 11,
**dadurch gekennzeichnet,**
**dass** in der Urethan- und Isocyanuratgruppen enthaltenden Isocyanatkomponente C) das Verhältnis der Urethangruppen zu den Isocyanuratgruppen frei wählbar ist.

13. Polyurethan-Pulverlackzusammensetzungen nach mindestens einem der Ansprüche 1 bis 12,
**dadurch gekennzeichnet, dass** als Blockierungsmittel in der Isocyanatkomponente C) Phenol, p-Chlorphenol, Benzylalkohol, Acetonoxim, Methylethylketoxim, Cyclopentanonoxim, Cyclohexanonoxim, Methylisobutylketoxim, Methyl-tert.-butylketoxim, Diisopropylketoxim, Diisobutylketoxim, Acetophenonoxim, N-Hydroxysuccinimid, Hydroxypyridine, ε-Caprolactam, Acetessigsäureethylester, Malonsäureester, Diisopropylamin, 3,5-Dimethylpyrazol, 1,2,4-Triazol, Glykolsäureester, Benzylmethacrylohydroxamat oder p-Hydroxybenzoesäuremethylester allein oder in Mischungen eingesetzt werden.

14. Polyurethan-Pulverlackzusammensetzungen nach mindestens einem der Ansprüche 1 bis 13,
**dadurch gekennzeichnet,**
**dass** die Isocyanatkomponente C) einen NCO-Gehalt von 8 bis 20 Gew.-% aufweist.

15. Polyurethan-Pulverlackzusammensetzungen nach mindestens einem der Ansprüche 1 bis 14,
**dadurch gekennzeichnet,**
**dass** die Isocyanatkomponente C) so blockiert vorliegt, dass auf ein Äquivalent Isocyanat 0,5 - 1,1 mol Blockierungsmittel kommen.

16. Polyurethan-Pulverlackzusammensetzungen nach mindestens einem der Ansprüche 1 bis 15,
**dadurch gekennzeichnet,**
**dass** das Mischungsverhältnis von (semi)kristallinen Polyester A), amorphen Polyester B) und blockierter Isocyanatkomponente C) so gewählt wird, dass auf eine OH-Gruppe 0,6 bis 1,2 blockierte NCO-Gruppen entfallen.

17. Polyurethan-Pulverlackzusammensetzungen nach mindestens einem der Ansprüche 1 bis 16,
**dadurch gekennzeichnet,**
**dass** ein OH/NCO-Verhältnis von 1 : 0,8 bis 1,1 zugrunde liegt.

18. Polyurethan-Pulverlackzusammensetzungen nach mindestens einem der Ansprüche 1 bis 17,
**dadurch gekennzeichnet,**
**dass** ein OH/NCO-Verhältnis von 1 : 1 zugrunde liegt.

19. Polyurethan-Pulverlackzusammensetzungen nach mindestens einem der Ansprüche 1 bis 18,
**dadurch gekennzeichnet,**
**dass** Katalysatoren in einer Konzentration von 0,01 bis 1,0 Gew.-%, bezogen auf die gesamte Pulverlackzusammensetzung, enthalten sind.

20. Polyurethan-Pulverlackzusammensetzungen nach Anspruch 19,
**dadurch gekennzeichnet,**
**dass** organische Zinnverbindungen und/oder Amine in einer Konzentration von 0,01 bis 1,0 Gew.-%, bezogen auf die gesamte Pulverlackzusammensetzung, enthalten sind.

21. Polyurethan-Pulverlackzusammensetzungen nach mindestens einem der Ansprüche 1 bis 20,
**dadurch gekennzeichnet,**
**dass** als Komponente D) Katalysatoren, Pigmente, Füllstoffe, Farbstoffe, Verlaufmittel, Licht- und Hitzestabilisatoren, Antioxidantien, Glanzverbesserer oder Effektadditive enthalten sind.

22. Verfahren zur Herstellung von PUR-Pulverlackzusammensetzungen,
**dadurch gekennzeichnet,**
**dass** sie im Wesentlichen
A) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer Glasübergangstemperatur von < - 10 °C,
bestehend aus
a) i) 85 bis 100 mol-% Bernsteinsäure oder
a) ii) 85 bis 100 mol-% Adipinsäure oder
a) iii) 85 bis 100 mol-% Sebacinsäure oder
a) iv) 85 bis 100 mol-% Dodecandisäure und
a) v) 15 bis 0 mol-% mindestens einer weiteren aliphatischen, cycloaliphatischen oder aromatischen Dicarbonsäure,
und
b) i) 80 bis 100 mol-% Monoethylenglykol oder
b) ii) 80 bis 100 mol-% Butandiol-1,4 oder
b) iii) 80 bis 100 mol-% Hexandiol-1,6 und
b) iv) 20 bis 0 mol-% mindestens eines weiteren aliphatischen oder cycloaliphatischen, linearen oder verzweigten Polyols,
und
B) 10 bis 80 Gew.-% mindestens eines amorphen Polyesters mit einer Hydroxylzahl von 15 bis 200 mg KOH/g, einem Schmelzpunkt von > 70 °C bis ≤ 120 °C und einer Glasübergangstemperatur von > 40 °C,
bestehend aus
c) i) 40 bis 100 mol-% Isophthalsäure und
c) ii) 60 bis 0 mol-% mindestens einer weiteren aliphatischen, cycloaliphatischen oder aromatischen Di- oder Polycarbonsäure,
und
d) i) 80 bis 100 mol-% mindestens eines linearen, aliphatischen oder cycloaliphatischen Diols und
d) ii) 20 bis 0 mol-% mindestens eines verzweigten, aliphatischen oder cycloaliphatischen Polyols
und
C) 5 bis 30 Gew.-% mindestens einer mit einem Blockierungsmittel partiell oder total blockierten Isocyanatkomponente mit Urethangruppen oder Urethan- und Isocyanuratgruppen,
und
D) gegebenenfalls Hilfs- und Zuschlagstoffe,
enthalten
und die Herstellung in beheizbaren Aggregaten bei einer oberen Temperaturgrenze zwischen 130 und 140 °C erfolgt.

23. Verfahren nach Anspruch 22,
**dadurch gekennzeichnet,**
**dass** die Herstellung in beheizbaren Knetern oder Extrudern erfolgt .

24. Verfahren nach Anspruch 22 oder 23,
**dadurch gekennzeichnet,**
**dass** als Ausgangsstoffe Verbindungen nach mindestens einem der Ansprüche 2 bis 21 eingesetzt werden.

25. Verwendung von Zusammensetzungen,
die im Wesentlichen
a) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer
Glasübergangstemperatur von < - 10 °C,
bestehend aus
a) i) 85 bis 100 mol-% Bernsteinsäure oder
a) ii) 85 bis 100 mol-% Adipinsäure oder
a) iii) 85 bis 100 mol-% Sebacinsäure oder
a) iv) 85 bis 100 mol-% Dodecandisäure und
a) v) 15 bis 0 mol-% mindestens einer weiteren aliphatischen, cycloaliphatischen oder aromatischen Dicarbonsäure,
und
b) i) 80 bis 100 mol-% Monoethylenglykol oder
b) ii) 80 bis 100 mol-% Butandiol-1,4 oder
b) iii) 80 bis 100 mol-% Hexandiol-1,6 und
b) iv) 20 bis 0 mol-% mindestens eines weiteren aliphatischen oder cycloaliphatischen, linearen oder verzweigten Polyols,
und
B) 10 bis 80 Gew.-% mindestens eines amorphen Polyesters mit einer Hydroxylzahl von 15 bis 200 mg KOH/g, einem Schmelzpunkt von ≥ 70 °C bis ≤ 120 °C und einer
Glasübergangstemperatur von > 40 °C,
bestehend aus
c) i) 40 bis 100 mol-% Isophthalsäure und
c) ii) 60 bis 0 mol-% mindestens einer weiteren aliphatischen, cycloaliphatischen oder aromatischen Di- oder Polycarbonsäure,
und
d) i) 80 bis 100 mol-% mindestens eines linearen, aliphatischen oder cycloaliphatischen Diols und
d) ii) 20 bis 0 mol-% mindestens eines verzweigten, aliphatischen oder cycloaliphatischen Polyols
und
C) 5 bis 30 Gew.-% mindestens einer mit einem Blockierungsmittel partiell oder total blockierten Isocyanatkomponente mit Urethangruppen oder Urethan- und Isocyanuratgruppen,
und
D) gegebenenfalls Hilfs- und Zuschlagstoffe,
enthalten,
zur Herstellung von Pulverlacken und Pulver Coil Coating-Lacken.

26. Verwendung nach Anspruch 25,
**dadurch gekennzeichnet,**
**dass** als Ausgangstoffe Verbindungen nach mindestens einem der Ansprüche 2 bis 21 enthalten sind.

27. Verfahren zur Beschichtung von Metallbändern nach dem Coil Coating-Verfahren durch Verwendung von PUR-Pulverlackzusammensetzungen,
die im Wesentlichen
A) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer Glasübergangstemperatur von < - 10 °C,
bestehend aus
a) i) 85 bis 100 mol-% Bernsteinsäure oder
a) ii) 85 bis 100 mol-% Adipinsäure oder
a) iii) 85 bis 100 mol-% Sebacinsäure oder
a) iv) 85 bis 100 mol-% Dodecandisäure und
a) v) 15 bis 0 mol-% mindestens einer weiteren aliphatischen, cycloaliphatischen oder aromatischen Dicarbonsäure,
und
b) i) 80 bis 100 mol-% Monoethylenglykol oder
b) ii) 80 bis 100 mol-% Butandiol-1,4 oder
b) iii) 80 bis 100 mol-% Hexandiol-1,6 und
b) iv) 20 bis 0 mol-% mindestens eines weiteren aliphatischen oder cycloaliphatischen, linearen oder verzweigten Polyols,
und
B) 10 bis 80 Gew.-% mindestens eines amorphen Polyesters mit einer Hydroxylzahl von 15 bis 200 mg KOH/g, einem Schmelzpunkt von > 70 °C bis < 120 °C und einer Glasübergangstemperatur von > 40 °C,
bestehend aus
c) i) 40 bis 100 mol-% Isophthalsäure und
c) ii) 60 bis 0 mol-% mindestens einer weiteren aliphatischen, cycloaliphatischen oder aromatischen Di- oder Polycarbonsäure,
und
d) i) 80 bis 100 mol-% mindestens eines linearen, aliphatischen oder cycloaliphatischen Diols und
d) ii) 20 bis 0 mol-% mindestens eines verzweigten, aliphatischen oder cycloaliphatischen Polyols
und
C) 5 bis 30 Gew.-% mindestens einer mit einem Blockierungsmittel partiell oder total blockierten Isocyanatkomponente mit Urethangruppen oder Urethan- und Isocyanuratgruppen,
und
D) gegebenenfalls Hilfs- und Zuschlagstoffe,
enthalten.

28. Verfahren nach Anspruch 27,
**dadurch gekennzeichnet,**
**dass** die PUR-Pulverlackzusammensetzungen Verbindungen nach mindestens einem der Ansprüche 2 bis 21 enthalten.

29. Mit PUR-Pulverlacken beschichtete Metallbänder nach dem Coil Coaing-Verfahren,
**dadurch gekennzeichnet,**
**dass** die PUR-Pulverlacke im Wesentlichen
A) 5 bis 80 Gew.-% mindestens eines (semi)kristallinen Polyesters mit einer Hydroxylzahl von 5 bis 100 mg KOH/g, einem Schmelzpunkt von 50 bis 130 °C und einer Glasübergangstemperatur von < - 10 °C,
bestehend aus
a) i) 85 bis 100 mol-% Bernsteinsäure oder
a) ii) 85 bis 100 mol-% Adipinsäure oder
a) iii) 85 bis 100 mol-% Sebacinsäure oder
a) iv) 85 bis 100 mol-% Dodecandisäure und
a) v) 15 bis 0 mol-% mindestens einer weiteren aliphatischen, cycloaliphatischen oder aromatischen Dicarbonsäure,
und
b) i) 80 bis 100 mol-% Monoethylenglykol oder
b) ii) 80 bis 100 mol-% Butandiol-1,4 oder
b) iii) 80 bis 100 mol-% Hexandiol-1,6 und
b) iv) 20 bis 0 mol-% mindestens eines weiteren aliphatischen oder cycloaliphatischen, linearen oder verzweigten Polyols,
und
B) 10 bis 80 Gew.-% mindestens eines amorphen Polyesters mit einer Hydroxylzahl von 15 bis 200 mg KOH/g, einem Schmelzpunkt von ≥ 70 °C bis ≤ 120 °C und einer Glasübergangstemperatur von > 40 °C,
bestehend aus
c) i) 40 bis 100 mol-% Isophthalsäure und
c) ii) 60 bis 0 mol-% mindestens einer weiteren aliphatischen, cycloaliphatischen oder aromatischen Di- oder Polycarbonsäure,
und
d) i) 80 bis 100 mol-% mindestens eines linearen, aliphatischen oder cycloaliphatischen Diols und
d) ii) 20 bis 0 mol-% mindestens eines verzweigten, aliphatischen oder cycloaliphatischen Polyols
und
C) 5 bis 30 Gew.-% mindestens einer mit einem Blockierungsmittel partiell oder total blockierten Isocyanatkomponente mit Urethangruppen oder Urethan- und Isocyanuratgruppen,
und
D) gegebenenfalls Hilfs- und Zuschlagstoffe,
enthalten.

30. Beschichtete Metallbänder nach Anspruch 29,
**dadurch gekennzeichnet,**
**dass** die PUR-Pulverlacke Verbindungen nach mindestens einem der Ansprüche 2 bis 21 enthalten.
